# EUROPÄISCHE PATENTSCHRIFT

(11) **EP 2 934 789 B1**
(45) Veröffentlichungstag und Bekanntmachung des Hinweises auf die Patenterteilung: **21.09.2016**
(21) Anmeldenummer: 13802313.0
(22) Anmeldetag: 02.12.2013
(51) Int. Cl.: B22D 11/16, B22D 11/18, G01K 1/14, B22D 11/20

(54) **VORRICHTUNG MIT EINEM TEMPERATURFÜHLER FÜR EINE STRANGGIESSKOKILLE**
APPARATUS WITH TEMPERATURE SENSOR FOR A CONTINUOUS CASTING MOULD
DISPOSITIF AVEC UNE SONDE DE TEMPÉRATURE POUR LINGOTIÈRE DE COULÉE CONTINUE

(30) Priorität: 21.12.2012 DE 102012224161
(43) Veröffentlichungstag der Anmeldung: 28.10.2015
(73) Patentinhaber: Primetals Technologies Austria GmbH, 4031 Linz (AT)
(72) Erfinder: LANG, Oliver, A-4407 Dietach (AT); LEITNER, Günter, A-4240 Freistadt (AT); LEITNER, Stefan, A-4020 Linz (AT); RADLGRUBER, Josef, A-4501 Neuhofen (AT); TRAUNER, Alfred, A-4320 Perg (AT)
(74) Vertreter: Metals@Linz
(86) Internationale Anmeldenummer: PCT/EP2013/075226
(87) Internationale Veröffentlichungsnummer: WO 2014/095325

(56) Entgegenhaltungen:
- EP-A2- 0 310 420
- FR-A1- 2 693 136

## Beschreibung

### Gebiet der Technik

Die vorliegende Erfindung betrifft eine Vorrichtung mit einem Temperaturfühler für eine Kokille, vorzugsweise eine Rohrkokille, einer Stranggießmaschine, wodurch die Temperatur der Kupferplatte der Kokille gemessen werden kann.

Da die Erfindung für sämtliche Kokillenarten einsetzbar ist, wird nachfolgend der Begriff Kupferplatte sowohl für eine flache Platte (z.B. eine Kupferplatte einer Brammenkokille) als auch für eine gekrümmte Platte (z.B. ein Rohr einer Rohrkokille) verwendet.

### Stand der Technik

Aus der KR 10-2004-0044005 A ist ein Temperaturfühler für eine Kokille einer Stranggießmaschine bekannt. Das Thermoelement wird innerhalb eines Einschraubbolzens geführt und durch eine Feder, die zwischen einem Ansatz des Thermoelements und einer mit dem Einschraubbolzen verbundenen Überwurfmutter angeordnet ist, gegen die Kupferplatte gepresst. Das Austreten von Kühlwasser aus dem Wassermantel (engl. *water jacket*) zwischen der Kokille und dem Wasserkasten wird durch eine Dichtung verhindert, die den Einschraubbolzen gegenüber dem Wasserkasten abdichtet. Da sich im Betrieb die typischerweise aus Kupfer oder einer Kupferlegierung bestehende Kupferplatte durch den Kontakt mit dem Flüssigstahl wesentlich stärker ausdehnt als der wassergekühlte, typischerweise aus Stahl bestehende, Wasserkasten, ist an dieser Lösung nachteilig, dass einerseits der Einschraubbolzen beträchtlichen mechanischen Spannungen ausgesetzt ist und andererseits die Dichtigkeit zwischen dem Einschraubbolzen und dem Wasserkasten nicht sichergestellt werden kann.

Aus der EP 310 420 A2 ist eine Vorrichtung mit einem Temperaturfühler für eine Kokille einer Stranggießmaschine bekannt, wobei die Kokille eine Kupferplatte und einen Wasserkasten umfasst, aufweisend ein Thermoelement zur Temperaturmessung mit einem Rohr und einem Ansatz; und einen Einschraubbolzen, der ein erstes Außengewinde am unteren Ende des Einschraubbolzens zum Einschrauben des Einschraubbolzens in die Kupferplatte, und ein Durchgangsloch umfasst.

Aus der FR 2693136 A1 ist ebenfalls eine Vorrichtung mit einem Temperaturfühler für eine Kokille einer Stranggießmaschine bekannt, wobei die Kokille eine Kupferplatte und einen Wasserkasten umfasst, aufweisend ein Thermoelement zur Temperaturmessung mit einem Rohr und einem Ansatz; einen Einschraubbolzen, der ein erstes Außengewinde am unteren Ende des Einschraubbolzens zum Einschrauben des Einschraubbolzens in die Kupferplatte, ein Durchgangsloch und ein Sackloch, wobei das Sackloch am unteren Ende des Einschraubbolzens angeordnet ist, eine zylindrische Mantelfläche und ein zweites Außengewinde umfasst, wobei die zylindrische Mantelfläche zwischen dem ersten und dem zweiten Außengewinde angeordnet ist, und der Ansatz des Thermoelements innerhalb des Sacklochs des Einschraubbolzens angeordnet ist. Die Vorrichtung weist weiter einen Dichtungsträger mit einer Dichtung und eine Überwurfmutter auf.

### Zusammenfassung der Erfindung

Die Aufgabe der Erfindung ist es, die Nachteile des Stands der Technik zu überwinden und eine Vorrichtung mit einem Temperaturfühler für eine Kokille einer Stranggießmaschine, vorzugsweise für eine Rohrkokille zum Vergießen von Strängen mit Knüppel- oder Vorblockprofil, anzugeben, der selbst bei starken Temperaturunterschieden zwischen der Kupferplatte und dem Wasserkasten eine fluiddichte Abdichtung des Thermoelements sicherstellen kann. Weiters soll auch der Austritt von Kühlwasser aus dem Wassermantel der Kokille sicher verhindert werden.

Außerdem soll der Temperaturfühler bei einem Wechsel der Rohrkokille einfach montier- und demontierbar sein.

Diese Aufgabe wird durch eine Vorrichtung mit einem Temperaturfühler nach Anspruch 1 gelöst. Vorteilhafte Ausführungsformen sind Gegenstand der abhängigen Ansprüche.

Konkret erfolgt die Lösung durch eine Vorrichtung mit einem Temperaturfühler für eine Kokille einer Stranggießmaschine, die eine Kupferplatte und einen Wasserkasten umfasst, aufweisend
- ein Thermoelement zur Temperaturmessung mit einem Rohr und einem Ansatz;
- einen Einschraubbolzen, der
   - ein erstes Außengewinde am unteren Ende des Einschraubbolzens zum Einschrauben des Einschraubbolzens in die Kupferplatte,
   - ein Durchgangsloch und ein Sackloch, wobei das Sackloch konzentrisch zum Durchgangsloch und das Sackloch am unteren Ende des Einschraubbolzens angeordnet ist,
   - eine zylindrische Mantelfläche, und
   - ein zweites Außengewinde umfasst, wobei die zylindrische Mantelfläche zwischen dem ersten und dem zweiten Außengewinde angeordnet ist, und zumindest der Ansatz des Thermoelements innerhalb des Sacklochs des Einschraubbolzens angeordnet ist;
- eine erste Dichtung, die in axialer Richtung zwischen dem Sackloch des Einschraubbolzens und dem Ansatz des Thermoelements und in radialer Richtung zwischen dem Rohr des Thermoelements und dem Sackloch des Einschraubbolzens angeordnet ist, sodass das Thermoelement gegenüber dem Einschraubbolzen abgedichtet und das Thermoelement gegen die Kupferplatte gepresst wird;
- ein Dichtungsträger mit einer zweiten Dichtung zur Abdichtung des Dichtungsträgers gegenüber dem Wasserkasten und einer dritten Dichtung zur Abdichtung des Dichtungsträgers gegenüber dem Einschraubbolzen; und
- eine Überwurfmutter zum Verspannen des Dichtungsträgers gegenüber dem Wasserkasten über das zweite Außengewinde.

Durch diese Konstruktion wird das Eindringen von Kühlwasser in das Thermoelement wirksam verhindert: Zum Einen wird das Thermoelement vom Kühlwasser über das abgedichtete (bspw. mit einer Dichtmasse versehene) erste Außengewinde getrennt. Zum Anderen verhindert die erste Dichtung das Eindringen von Feuchtigkeit oder Flüssigkeit (z.B. Tropfwasser) über die Durchgangsbohrung des Einschraubbolzens in das Thermoelement. Weiters wird aber auch der Austritt von Kühlwasser aus dem die Kokille umschließenden Wassermantel zwischen der Kupferplatte und dem Wasserkasten verhindert, da die Mantelfläche des Einschraubbolzens über eine dritte Dichtung gegen den Dichtungsträger, und der Dichtungsträger über eine zweite Dichtung gegen den Wasserkasten abgedichtet ist. Da - bis auf Wärmedehnungen - keine Relativbewegungen zwischen den Bauteilen auftreten, können alle Dichtungen als statische Dichtungen ausgebildet sein. Durch die Trennung der Abdichtung des Dichtungsträgers in axialer und radialer Richtung können selbst große Dehnungsunterschiede zwischen der Kupferplatte und dem Wasserkasten vollständig von den Dichtungen aufgenommen werden, ohne dass dadurch die Dichtigkeit leiden würde.

Dabei umfasst der Einschraubbolzen ein Durchgangsloch und ein konzentrisches Sackloch am unteren Ende des Einschraubbolzens, wobei das Sackloch einen größeren Durchmesser als das Durchgangsloch aufweist, sodass zumindest das vordere Ende des Thermoelements innerhalb des Sacklochs des Einschraubbolzens angeordnet ist.

Ein guter Kontakt zwischen der Spitze des Thermoelements und der Kupferplatte wird sichergestellt, da das Thermoelement ein Rohr und einen Ansatz umfasst, wobei die erste Dichtung zwischen dem Ansatz und dem Grund des Sacklochs angeordnet ist.

Die Dichtungen weisen eine gute chemische Beständigkeit auf, wenn die erste, zweite oder/oder dritte Dichtung aus VITON besteht, und dessen Härte vorzugsweise etwa 70 Shore beträgt. Im Allgemeinen bestehen alle genannten Dichtungen aus Viton.

Es ist zweckmäßig, wenn die zweite und/oder dritte Dichtung als O-Ringe ausgebildet sind.

Obwohl jede Dichtung eine gewisse Elastizität aufweist, kann - z.B. wenn die erste Dichtung zu steif ist- zwischen dem Grund des Sacklochs und der ersten Dichtung oder zwischen der ersten Dichtung und dem Ansatz des Thermoelements eine Feder angeordnet werden, die einen Anpressdruck des Thermoelements auf die Kupferplatte sicherstellen kann.

Eine einfache und sichere Abdichtung des ersten Außengewindes gegenüber der Kupferplatte wird erreicht, wenn das erste Außengewinde mittels einer Dichtmasse in die Kupferplatte eingedichtet ist. Alternativ dazu kann das untere Ende des Einschraubbolzens über eine statische Dichtung, bspw. ein O-Ring, gegenüber der Kupferplatte abgedichtet werden.

Bei einer technisch äquivalenten Lösung zur zweistückigen Ausführung des Dichtungsträgers und der Überwurfmutter bildet der Dichtungsträger und die Überwurfmutter eine einstückige Einheit aus.

Das Temperaturprofil in der Kupferplatte der Kokille wird in Auszugsrichtung diskretisiert aufgelöst, wenn bei der Kokille mit mehreren Temperaturfühlern nach einem der Ansprüchen 1 bis 6 die Temperaturfühler in mehreren Reihen, die vorzugsweise im Wesentlichen quer zur Gießrichtung der Kokille liegen, angeordnet sind.

Eine Diskretisierung des Temperaturprofils in Winkelrichtung wird erreicht, wenn mehrere Temperaturfühler in einer Reihe, vorzugsweise unter Einhaltung eines konstanten Winkelversatzes um den Mittelpunkt des Formhohlraums der Kokille, angeordnet sind.

Um den Verkabelungsaufwand zu reduzieren, ist es vorteilhaft, wenn die Temperatur-Signalkabel mehrerer Temperaturfühler mit einer Sammelbox verbunden sind.

Um die Montage-/Demontagezeit zu reduzieren, ist es vorteilhaft, wenn die Sammelbox über einen lösbaren Stecker mit einer Anlagensteuerung verbunden ist.

Da die elektrischen Signale von den Thermoelementen sehr empfindlich gegenüber elektromagnetischen Störungen sind, ist es vorteilhaft, wenn die Sammelbox eine Auswerteschaltung zur Bestimmung der Temperaturen der Temperaturfühler aufweist und die Sammelbox über eine Schnittstelle zur analogen oder digitalen Übertragung der Temperaturen mit der Anlagensteuerung verbunden ist.

Außerdem ist es vorteilhaft, wenn die Schnittstelle eine digitale Busschnittstelle ist. Durch das Busprotokoll können z.B. Übertragungsfehler erkannt und vorteilhafterweise selbst korrigiert werden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die zeigen:
Fig 1 eine schematische Darstellung eines erfindungsgemäßen Temperaturfühlers in einer Kokille in einem Auf- und Grundriss
Fig 2 und 3 je eine perspektivische Darstellung einer Rohrkokille mit mehreren Temperaturfühlern
Fig 4 eine geschnittene Darstellung eines Aufrisses der Kokille nach den Figuren 2 und 3
Fig 5 ein Grundriss zu Fig 4
Fig 6 eine Schnittdarstellung entlang der Schnittlinie A-A von Fig 5
Fig 7 und 8 ein Auf- und ein Grundriss einer Sammelbox für die Signalleitungen von mehreren Temperaturfühlern
Fig 9 eine Ausführungsform des Temperaturfühlers nach Fig 1
Fig 10 ein besonders einfacher Temperaturfühler, der sich für geringe Wärmedehnungen zwischen der Kupferplatte und dem Wassermantel eignet

### Beschreibung der Ausführungsformen

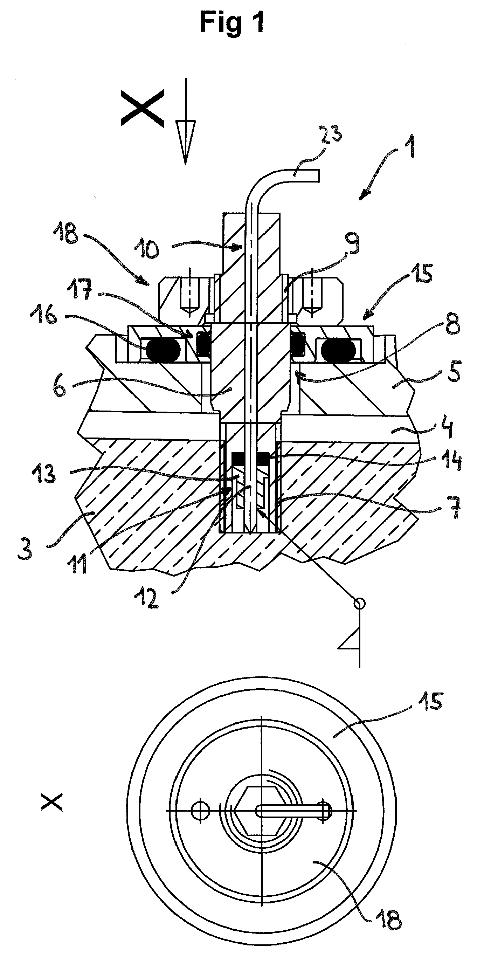

Die Fig 1 zeigt schematisch einen Temperaturfühler 1 in einer Kokille 2, die als Rohrkokille zum Vergießen eines Strangs mit Knüppel- oder Vorblockprofil ausgebildet ist. Im eingebauten Zustand ist der Temperaturfühler 1 über das erste Außengewinde 7 des Einschraubbolzens 6 mit der Kupferplatte 3 der Kokille 2 verbunden, wobei zwischen dem ersten Außengewinde 7 und dem Innengewinde der Kupferplatte 3 eine Dichtmasse vorhanden ist, sodass kein Kühlwasser aus dem Wassermantel 4 der Kokille 2 zur Spitze des Thermoelements 12 dringen kann. Alternativ wäre es ebenfalls möglich, das Eindringen von Kühlwasser durch einen O-Ring zwischen dem Einschraubbolzen 6 und der Kupferplatte 3 zu verhindern. Das Thermoelement 12 weist ein Rohr und einen Ansatz 13 auf, der mit dem Rohr verschweißt ist, und ist im eingebauten Zustand innerhalb des Einschraubbolzens 6 angeordnet. Hierzu weist der Einschraubbolzen 6 ein Durchgangsloch 10 und ein Sackloch 11 am unteren Ende des Bolzens 6 auf. Zwischen dem Grund des Sacklochs 11 und dem Ansatz 13 ist eine erste Dichtung 14 angeordnet, die einerseits das Eindringen von Flüssigkeit über das Durchgangsloch 10 zur Spitze des Thermoelements 12 verhindert und außerdem über die Elastizität der Dichtung 14 einen bestimmten Kontaktdruck zwischen der Spitze des Thermoelements 12 und der Kupferplatte 3 sicherstellt. Durch die vordefinierter Kraft mit der das Thermoelement gegen die Kupferplatte 3 gedrückt wird, werden ein guter Kontakt und verlässliche Messergebnisse garantiert. Dem ersten Außengewinde 7 nachfolgend weist der Einschraubbolzen 6 eine zylindrische Mantelfläche 8 und wiederum nachfolgend ein zweites Außengewinde 9 auf. Um das Austreten von Kühlwasser aus dem Wassermantel 4 zu verhindern, weist der Temperaturfühler 1 einen Dichtungsträger 15 und eine Überwurfmutter 18 auf. Der Dichtungsträger haltert zwei Dichtungen, nämlich eine zweite Dichtung 16 und eine dritte Dichtung 17, die jeweils in der horizontalen bzw. tangentialen Richtung und in der vertikalen bzw. radialen Richtung Abdichtfunktionen übernehmen. Zum Einen ist die Mantelfläche 8 des Einschraubbolzens 6 in vertikaler Richtung über die dritte Dichtung 17, die als O-Ring ausgeführt ist, gegenüber dem Dichtungsträger 15 abgedichtet. Zum Anderen ist der Wasserkasten 5 gegenüber dem Dichtungsträger 15 über die zweite Dichtung 16 abgedichtet. Somit können die zweite 16 und die dritte Dichtung 17 auch größere Wärmedehnungen in den orthogonalen Ebenen mühelos aufnehmen, sodass die Dichtigkeit stets sichergestellt ist. Der Kopf des Einschraubbolzens 6 weist einen Sechskant zum Ein- und Ausschrauben des Bolzens 6 auf. Je nach Stückzahlen wäre es natürlich ebenfalls möglich, die Überwurfmutter 18 - die im dargestellten Fall durch das Eingreifen eines Spannschlüssels in zwei Bohrungen mit dem Einschraubbolzen 6 verspannt werden kann - und den Dichtungsträger 15 einstückig auszuführen. Dadurch würde die Anzahl der Einzelteile reduziert; für geringere Stückzahlen ist es jedoch meist günstiger, die Überwurfmutter 18 als Normteil auszuführen.

Die Temperatur der Kupferplatte 3 als physikalische Messgröße wird vom Thermoelement 12 in ein elektrisches Messsignal umgewandelt und über ein zweiadriges Signalkabel 23 aus der Kokille 2 geführt. Die erhaltenen Messsignale werden in einem Prozessrechner der Stranggießmaschine zur Regelung, Steuerung bzw. Diagnose des Stranggießprozesses verwendet.

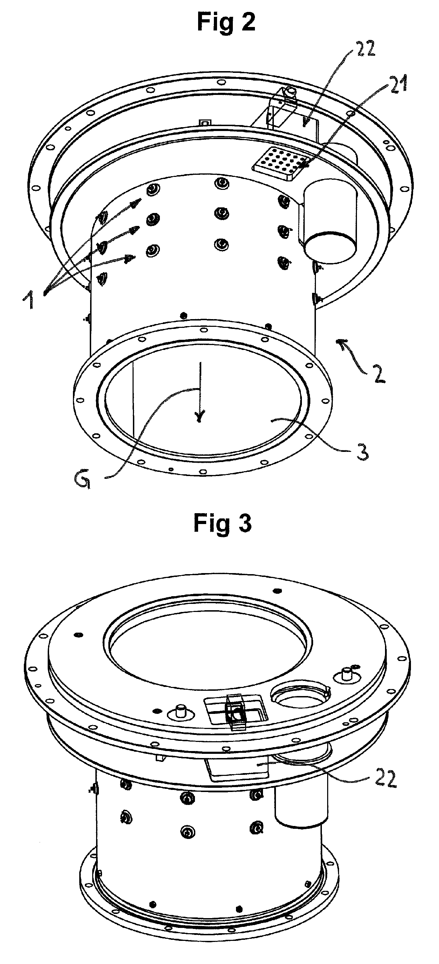

Die Figuren 2 und 3 zeigen die Kokille 2 mit mehreren Temperaturfühlern 1, die in drei, in Gießrichtung versetzten, Ebenen am Umfang der Kokille 2 angeordnet sind, in perspektivischen Ansichten. Durch die Anordnung der Temperaturfühler 1 kann der Temperaturverlauf während des Abkühlungsprozesses des flüssigen Stahls in der Kokille 2 ermittelt werden. Die elektrischen Kabeln 23 von den Thermoelementen der Temperaturfühler 1 werden durch eine Kabeldurchführung 21 zu einer Sammelbox 22 geführt, die über eine analoge oder digitale Schnittstelle, mit dem Prozessrechner verbunden ist.

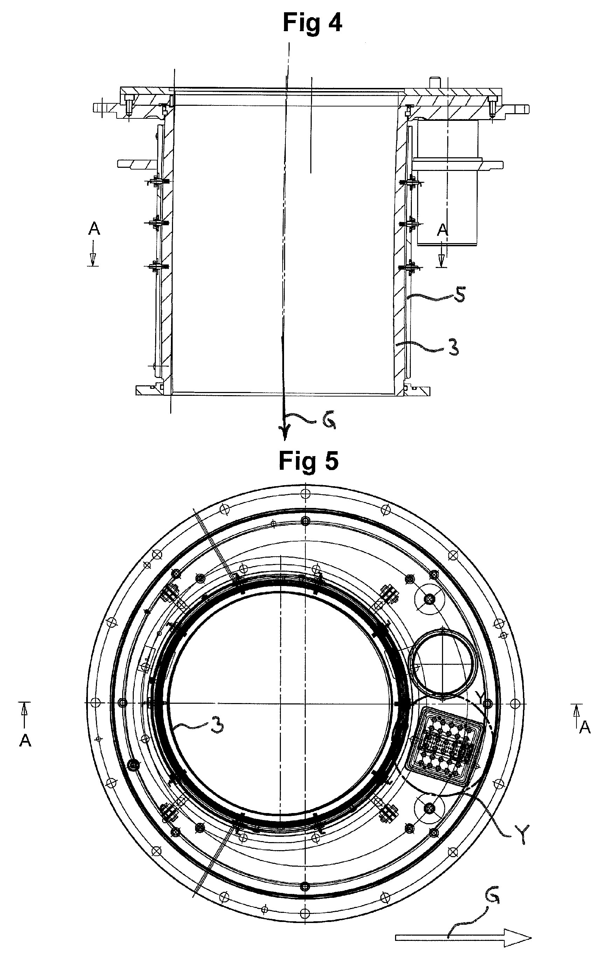

In Fig 4 sind die drei, in Gießrichtung versetzten und jeweils quer zur Gießrichtung der Kokille 2 liegenden Ebenen, auf denen die Temperaturfühler 1 angeordnet sind, gut erkennbar. Je nach Länge des Kokillenrohrs wären aber auch deutlich mehr Ebenen möglich.

Die Fig 5 zeigt einen Grundriss zu Fig 4. Auf der links dargestellten Seite des Kupferrohrs 3 befindet sich die Festseite; auf der rechten Seite des Kupferrohrs 3 befindet sich die Losseite einer, der Kokille 2 nachfolgenden, Strangführung der Stranggießmaschine.

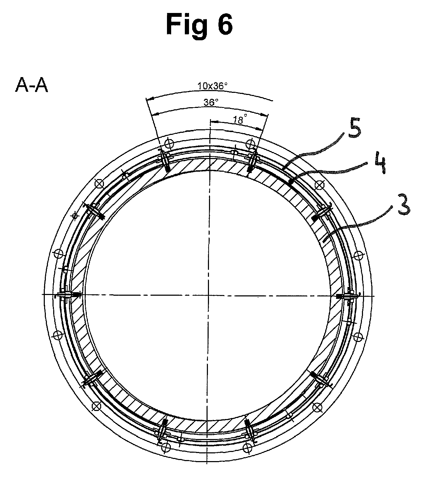

Die Fig 6 zeigt, dass auf jeder Ebene von Fig 4 zehn Temperaturfühler 1 angeordnet sind. Somit wird das Temperaturprofil der dargestellten Kokille 2 ständig über 30 Temperaturfühler überwacht, wodurch die Gießgeschwindigkeit der Stranggießmaschine maximiert werden kann, ohne dass es zu sog. Schalenhängern, Durchbrüchen oder ähnlich unerwünschten Phänomenen kommt. Beispielsweise kann bei einem lokalen, überdurchschnittlich starken Temperaturanstieg im Kupferrohr 3 vorbeugend in den Stranggießprozess eingegriffen werden, ohne dass dies in einem Durchbruch resultieren würde.

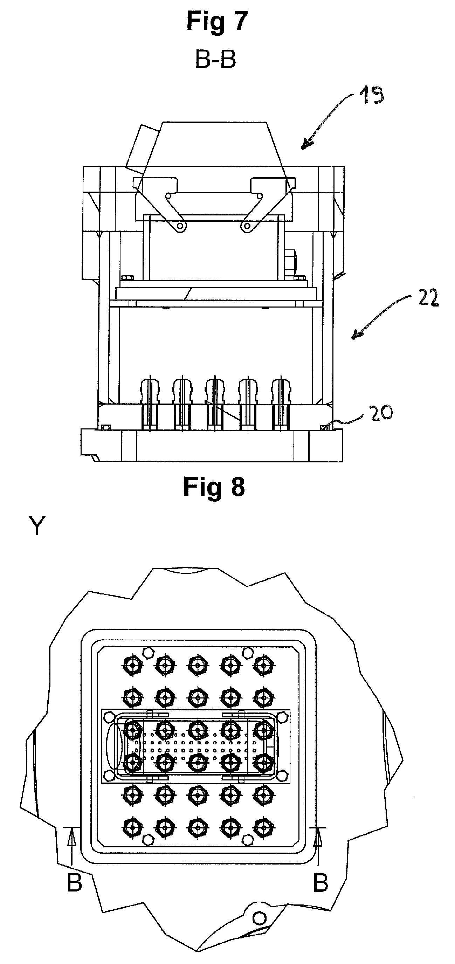

Die Fig 8 zeigt das Detail Y aus Fig 5. Die Fig 7 zeigt den Schnitt entlang der Schnittlinie B-B von Fig 8 jedoch mit angestecktem Stecker 19. Wie bereits in Fig 2 angedeutet, werden die Kabel 23 jedes Thermoelements 10 eines Temperaturfühlers 1 durch die Kabeldurchführung 21 zur Sammelbox 22 geführt. Konkret werden die 30 Kabel von den 30 Temperaturfühlern 1 der Kokille 2 zur Sammelbox 22 geführt, wobei im dargestellten Fall die Sammelbox 22 über eine analoge Schnittstelle in Form eines Steckers 19, bspw. einen sog. Harting HAN B Stecker, zur Übertragung der Temperatursignale mit der Anlagensteuerung verbunden ist.

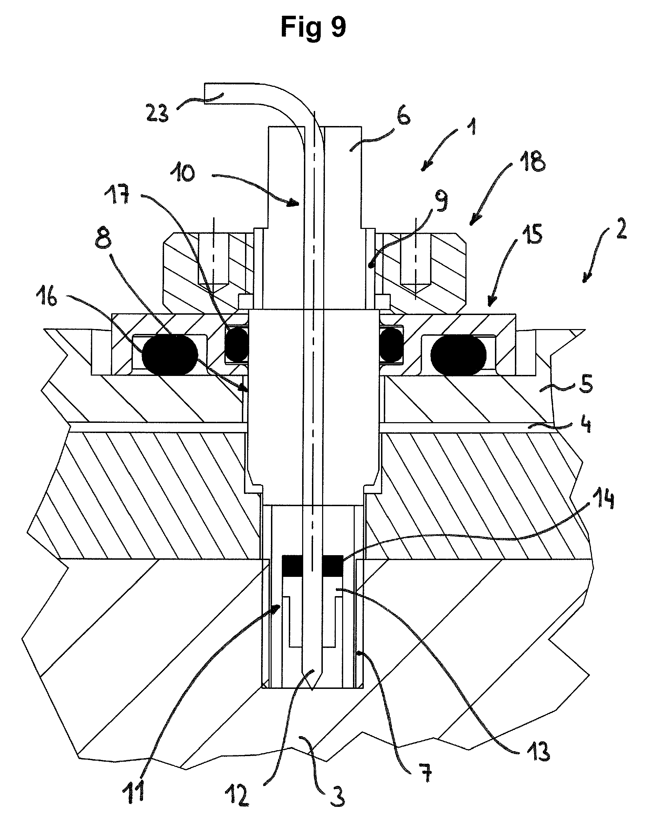

Die Fig 9 zeigt eine Konstruktionsvariante des Temperaturfühlers nach Fig 1 mit einem geringeren Abstand zwischen der Kupferplatte 3 und dem Wasserkasten 5.

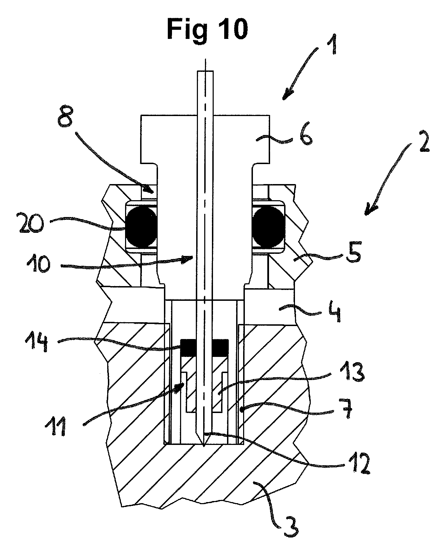

Schließlich ist in Fig 10 ein weiterer Temperaturfühler 1 dargestellt, der sich für relativ geringe Verschiebungen zwischen der Kupferplatte 3 und dem Wasserkasten 5 der Kokille 2 eignet. Dabei ist wiederum ein Einschraubbolzen 6 vorhanden, der über das Außengewinde 7 des Einschraubbolzens 6 mit der Kupferplatte 3 verschraubt ist. So wie in Fig 1 ist das Thermoelement 12 im Inneren des Einschraubbolzens 6 angeordnet und über eine erste Dichtung 14, die sich am Ansatz 13 abstützt und einen konstanten Anpressdruck des Thermoelements 12 an das Kupferrohr 3 sicherstellt, abgedichtet. Um das Austreten von Kühlwasser aus dem Wassermantel 4 zu vermeiden, ist die Mantelfläche 8 des Einschraubbolzens 6 über eine Dichtung 20 gegenüber dem Wasserkasten 5 abgedichtet, wobei die Dichtung 20 so wie die dritte Dichtung 17 von Fig 1 als O-Ring ausgebildet ist.

Allen Ausführungsformen ist gemein, dass das Kupferrohr 3 von einem Wassermantel 4 umgeben ist, sodass eine möglichst hohe Wärmemenge von der flüssigen Stahlschmelze im Inneren der Kokille 2 in möglichst gleichmäßiger Form an das Kühlwasser abgegeben wird. Durch den erfindungsgemäßen Temperaturfühler 1 wird die Strömung des Kühlwassers im Wassermantel 4 nur unwesentlich gestört, sodass die durch den Temperaturfühler 1 gemessenen Temperaturen im Kupferrohr 3 sehr gut der Situation ohne Temperaturfühler entsprechen. Obwohl die Thermoelemente 1 bei den Ausführungsbeispielen von Typ K sind, ist die Erfindung keineswegs darauf beschränkt und es sind natürlich auch andere Typen von Thermoelementen verwendbar.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Temperaturfühler
- 2: Kokille
- 3: Kupferrohr
- 4: Wassermantel
- 5: Wasserkasten
- 6: Einschraubbolzen
- 7: erstes Außengewinde
- 8: Mantelfläche
- 9: zweites Außengewinde
- 10: Durchgangsloch
- 11: Sackloch
- 12: Thermoelement
- 13: Ansatz
- 14: erste Dichtung
- 15: Dichtungsträger
- 16: zweite Dichtung
- 17: dritte Dichtung
- 18: Überwurfmutter
- 19: Stecker
- 20: Dichtung
- 21: Kabeldurchführung
- 22: Sammelbox
- 23: Signalkabel

- G: Gießrichtung

## Patentansprüche

1. Vorrichtung mit einem Temperaturfühler (1) für eine Kokille (2) einer Stranggießmaschine, wobei die Kokille (2) eine Kupferplatte (3) und einen Wasserkasten (5) umfasst, aufweisend
- ein Thermoelement (12) zur Temperaturmessung mit einem Rohr und einem Ansatz (13);
- einen Einschraubbolzen (6), der
- ein erstes Außengewinde (7) am unteren Ende des Einschraubbolzens (6) zum Einschrauben des Einschraubbolzens (6) in die Kupferplatte (3), und
- ein Durchgangsloch (10) umfasst, **dadurch gekennzeichnet, dass** der Einschraubbolzen (6) mit einem Sackloch (11) versehen ist, wobei das Sackloch (11) konzentrisch zum Durchgangsloch (10) und das Sackloch (11) am unteren Ende des Einschraubbolzens (6) angeordnet ist,
- eine zylindrische Mantelfläche (8), und
- ein zweites Außengewinde (9) umfasst, wobei die zylindrische Mantelfläche (8) zwischen dem ersten (7) und dem zweiten Außengewinde (9) angeordnet ist, und zumindest der Ansatz (13) des Thermoelements (12) innerhalb des Sacklochs (11) des Einschraubbolzens (6) angeordnet ist;
- eine erste Dichtung (14), die in axialer Richtung zwischen dem Sackloch (11) des Einschraubbolzens (6) und dem Ansatz (13) des Thermoelements (12) und in radialer Richtung zwischen dem Rohr (10) des Thermoelements (12) und dem Sackloch (11) des Einschraubbolzens (6) angeordnet ist, sodass das Thermoelement (12) gegenüber dem Einschraubbolzen (6) abgedichtet und das Thermoelement (12) gegen die Kupferplatte (3) gepresst wird;
- ein Dichtungsträger (15) mit einer zweiten Dichtung (16) zur Abdichtung des Dichtungsträgers (15) gegenüber dem Wasserkasten (5) und einer dritten Dichtung (17) zur Abdichtung des Dichtungsträgers (15) gegenüber dem Einschraubbolzen (6); und
- eine Überwurfmutter (18) zum Verspannen des Dichtungsträgers (15) gegenüber dem Wasserkasten (5) über das zweite Außengewinde (9).

2. Vorrichtung nach einem der vorhergehenden Ansprüche, **dadurch gekennzeichnet, dass** die erste, zweite oder dritte Dichtung (14,16,17) aus VITON besteht.

3. Vorrichtung nach Anspruch 2, **dadurch gekennzeichnet, dass** dieHärte der ersten, zweiten oder dritten Dichtung (14,16,17) 70 Shore beträgt.

4. Vorrichtung nach einem der vorhergehenden Ansprüche, **dadurch gekennzeichnet, dass** die zweite (16) und/oder dritte Dichtung (17) als O-Ringe ausgebildet sind.

5. Vorrichtung nach einem der vorhergehenden Ansprüche, **dadurch gekennzeichnet, dass** zwischen dem Grund des Sacklochs (11) und der ersten Dichtung (14) oder zwischen der ersten Dichtung (14) und dem Ansatz (13) eine Feder angeordnet ist, die einen Anpressdruck des Thermoelements (12) auf die Kupferplatte (3) sicherstellt.

6. Vorrichtung nach einem der vorhergehenden Ansprüche, **dadurch gekennzeichnet, dass** das erste Außengewinde (7) mittels einer Dichtmasse in die Kupferplatte (3) eingedichtet ist.

7. Vorrichtung nach einem der vorhergehenden Ansprüche, **dadurch gekennzeichnet, dass** der Dichtungsträger (15) und die Überwurfmutter (18) eine einstückige Einheit bilden.

8. Kokille (2) mit mehreren Temperaturfühlern (1) nach einem der vorhergehenden Ansprüche, wobei die Temperaturfühler (1) in mehreren Reihen angeordnet sind.

9. Kokille (2) nach Anspruch 8, **dadurch gekennzeichnet, dass** die Temperaturfühler (1) in mehreren Reihen quer zur Gießrichtung (G) der Kokille (2) angeordnet sind.

10. Kokille nach Anspruch 8, **dadurch gekennzeichnet, dass** mehrere Temperaturfühler (1) in einer Reihe angeordnet sind.

11. Kokille nach Anspruch 10, **dadurch gekennzeichnet, dass** mehrere Temperaturfühler (1) in einer Reihe unter Einhaltung eines konstanten Winkelversatzes um den Mittelpunkt des Formhohlraums der Kokille (2) angeordnet sind.

12. Kokille nach einem der Ansprüche 8 bis 11, **dadurch gekennzeichnet, dass** die Temperatur-Signalkabel (23) mehrerer Temperaturfühler (1) mit einer Sammelbox (22) verbunden sind.

13. Kokille nach Anspruch 12, **dadurch gekennzeichnet, dass** die Sammelbox (22) über einen lösbaren Stecker (19) mit einer Anlagensteuerung verbunden ist.

14. Kokille nach Anspruch 13, **dadurch gekennzeichnet, dass** die Sammelbox (22) eine Auswerteschaltung zur Bestimmung der Temperaturen der Temperaturfühler (1) aufweist und die Sammelbox (22) über eine Schnittstelle zur analogen oder digitalen Übertragung der Temperaturen mit der Anlagensteuerung verbunden ist.

15. Kokille nach Anspruch 14, **dadurch gekennzeichnet, dass** die Schnittstelle eine digitale Busschnittstelle ist.

## Claims

1. Apparatus with temperature sensor (1) for a mould (2) of a continuous casting machine, wherein the mould (2) comprises a copper plate (3) and a water tank (5), having
- a thermocouple (12) for temperature measurement, having a tube and a projection (13);
- a screw-in bolt (6) that comprises
- a first external thread (7) at the lower end of the screw-in bolt (6) for screwing the screw-in bolt (6) into the copper plate (3), and
- a through-hole (10), **characterized in that** the screw-in bolt (6) is provided with a blind hole (11), wherein the blind hole (11) is concentric with the through-hole (10) and the blind hole (11) is arranged on the lower end of the screw-in bolt (6),
- a cylindrical lateral face (8), and
- a second external thread (9), wherein the cylindrical lateral face (8) is arranged between the first (7) and second (9) external threads, and at least the projection (13) of the thermocouple (12) is arranged inside the blind hole (11) of the screw-in bolt (6);
- a first seal (14) which is arranged in the axial direction between the blind hole (11) of the screw-in bolt (6) and the projection (13) of the thermocouple (12) and in the radial direction between the tube (10) of the thermocouple (12) and the blind hole (11) of the screw-in bolt (6), such that the thermocouple (12) is sealed with respect to the screw-in bolt (6) and the thermocouple (12) is pressed against the copper plate (3);
- a seal support (15) having a second seal (16) for sealing the seal support (15) with respect to the water tank (5) and a third seal (17) for sealing the seal support (15) with respect to the screw-in bolt (6); and
- a union nut (18) for bracing the seal support (15) against the water tank (5) by means of the second external thread (9).

2. Apparatus according to Claim 1, **characterized in that** the first, second or third seal (14, 16, 17) is made of Viton.

3. Apparatus according to Claim 2, **characterized in that** the hardness of the first, second or third seal (14, 16, 17) is 70 Shore.

4. Apparatus according to one of the preceding claims, **characterized in that** the second (16) and/or third (17) seals are designed as O-rings.

5. Apparatus according to one of the preceding claims, **characterized in that** between the bottom of the blind hole (11) and the first seal (14) or between the first seal (14) and the projection (13) there is arranged a spring that ensures a contact force between the thermocouple (12) and the copper plate (3).

6. Apparatus according to one of the preceding claims, **characterized in that** the first external thread (7) is sealed into the copper plate (3) by means of a sealing compound.

7. Apparatus according to one of the preceding claims, **characterized in that** the seal support (15) and the union nut (18) form a single unit.

8. Mould (2) having multiple temperature sensors (1) according to one of the preceding claims, wherein the temperature sensors (1) are arranged in multiple rows.

9. Mould (2) according to Claim 8, **characterized in that** the temperature sensors (1) are arranged in multiple rows transversely with respect to the casting direction (G) of the mould (2).

10. Mould according to Claim 8, **characterized in that** multiple temperature sensors (1) are arranged in one row.

11. Mould according to Claim 10, **characterized in that** multiple temperature sensors (1) are arranged in one row, maintaining a constant angular offset around the central point of the cavity of the mould (2).

12. Mould according to one of Claims 8 to 11, **characterized in that** the temperature signal cables (23) of multiple temperature sensors (1) are connected to a collector box (22).

13. Mould according to Claim 12, **characterized in that** the collector box (22) is connected, via a releasable plug (19), to a plant control unit.

14. Mould according to Claim 13, **characterized in that** the collector box (22) has an evaluation circuit for determining the temperatures of the temperature sensors (1) and the collector box (22) is connected to the plant control unit via an interface for analogue or digital transmission of the temperatures.

15. Mould according to Claim 14, **characterized in that** the interface is a digital bus interface.

## Revendications

1. Dispositif avec un capteur de température (1) pour une lingotière (2) d'une machine à coulée continue, dans lequel la lingotière (2) comprend une plaque de cuivre (3) et un réservoir d'eau (5), présentant
- un thermo-élément (12) destiné à une mesure de température, équipé d'un tube et d'un instrument (13) ;
- un boulon vissable (6), qui comprend
- un premier filetage extérieur (7) situé au niveau de l'extrémité inférieure du boulon vissable (6) en vue d'un vissage du boulon vissable (6) dans la plaque de cuivre (3), et
- un trou traversant (10), **caractérisé en ce que** le boulon vissable (6) est muni d'un trou borgne (11), dans lequel le trou borgne (11) est agencé concentrique par rapport au trou traversant (10) et le trou borgne (11) est agencé au niveau de l'extrémité inférieure du boulon vissable (6),
- une surface latérale cylindrique (8), et
- un deuxième filetage extérieur (9), dans lequel la surface latérale cylindrique (8) est agencée entre le premier filetage extérieur (7) et le deuxième filetage extérieur (9), et au moins l'instrument (13) du thermo-élément (12) est agencée à l'intérieur du trou borgne (11) du boulon vissable (6) ;
- un premier joint d'étanchéité (14), qui est agencé dans le sens axial entre le trou borgne (11) du boulon vissable (6) et l'instrument (13) du thermo-élément (12) et dans le sens radial entre le tube (10) du thermo-élément (12) et le trou borgne (11) du boulon vissable (6), de telle manière que le thermo-élément (12) est rendu étanche par rapport au boulon vissable (6) et le thermo-élément (12) est pressé contre la plaque de cuivre (3) ;
- un porte-joint (15) avec un deuxième joint d'étanchéité (16) destiné à rendre étanche le porte-joint (15) par rapport au réservoir d'eau (5) et un troisième joint d'étanchéité (17) destiné à rendre étanche le porte-joint (15) par rapport au boulon vissable (6) ; et
- un écrou à chapeau (18) destiné à contraindre le porte-joint (15) contre le réservoir d'eau (5) par l'intermédiaire du deuxième filetage extérieur (9).

2. Dispositif selon l'une quelconque des revendications précédentes, **caractérisé en ce que** les premier, deuxième ou troisième joints d'étanchéité (14, 16, 17) sont constituées de VITON.

3. Dispositif selon la revendication 2, **caractérisé en ce que** la dureté des premier, deuxième et troisième joints d'étanchéité (14, 16, 17) est de 70 degrés Shore.

4. Dispositif selon l'une quelconque des revendications précédentes, **caractérisé en ce que** les deuxième (16) et/ou troisième joints d'étanchéité (17) sont réalisés en tant que joints ronds.

5. Dispositif selon l'une quelconque des revendications précédentes, **caractérisé en ce qu'**un ressort, qui assure une pression de serrage du thermo-élément (12) sur la plaque de cuivre (3), est agencé entre la base du trou borgne (11) et le premier joint d'étanchéité (14) ou entre le premier joint d'étanchéité (14) et l'instrument (13).

6. Dispositif selon l'une quelconque des revendications précédentes, **caractérisé en ce que** le premier filetage extérieur (7) est rendu étanche dans la plaque de cuivre (3) au moyen d'une pâte d'étanchéité.

7. Dispositif selon l'une quelconque des revendications précédentes, **caractérisé en ce que** le porte-joint (15) et l'écrou à chapeau (18) forment une unité d'un seul tenant.

8. Lingotière (2) avec plusieurs capteurs de température (1) selon l'une quelconque des revendications précédentes, dans laquelle les capteurs de température (1) sont agencés en plusieurs rangées.

9. Lingotière (2) selon la revendication 8, **caractérisée en ce que** les capteurs de température (1) sont agencés en plusieurs rangées transversalement par rapport à un sens de coulée (G) de la lingotière (2).

10. Lingotière selon la revendication 8, **caractérisée en ce que** plusieurs capteurs de température (1) sont agencés en une rangée.

11. Lingotière selon la revendication 10, **caractérisée en ce que** plusieurs capteurs de température (1) sont agencés en une rangée avec respect d'un désalignement angulaire constant autour du centre de la cavité de moule de la lingotière (2).

12. Lingotière selon l'une quelconque des revendications 8 à 11, **caractérisée en ce que** les câbles de signalisation de température (23) de plusieurs capteurs de température (1) sont reliés à un boîtier collecteur (22).

13. Lingotière selon la revendication 12, **caractérisée en ce que** le boîtier collecteur (22) est relié à une commande d'installation par l'intermédiaire d'une fiche amovible (19).

14. Lingotière selon la revendication 13, **caractérisée en ce que** le boîtier collecteur (22) présente un circuit d'interprétation destiné à évaluer les températures des capteurs de température (1) et le boitier collecteur (22) est relié à la commande d'installation par l'intermédiaire d'une interface en vue d'une transmission analogique ou numérique desdites températures.

15. Lingotière selon la revendication 14, **caractérisée en ce que** l'interface est une interface de bus numérique.
